Europäisches Patentamt

European Patent Office

Office européen des brevets

(11) Veröffentlichungsnummer : **0 062 268**
**B1**

(12) **EUROPÄISCHE PATENTSCHRIFT**

(45) Veröffentlichungstag der Patentschrift :
28.11.84

(51) Int. Cl.³ : **B 60 T 13/52**

(21) Anmeldenummer : **82102597.0**

(22) Anmeldetag : **27.03.82**

(54) **Pneumatischer Bremskraftverstärker, insbesondere für hydraulische Kraftfahrzeugbremsanlagen.**

(30) Priorität : 04.04.81 DE 3113708

(43) Veröffentlichungstag der Anmeldung :
13.10.82 Patentblatt 82/41

(45) Bekanntmachung des Hinweises auf die Patenterteilung : 28.11.84 Patentblatt 84/48

(84) Benannte Vertragsstaaten :
FR GB IT SE

(56) Entgegenhaltungen :
DE-A- 1 630 668
DE-A- 2 949 811
GB-A-   860 202
GB-A-   860 516
US-A- 2 900 962

(73) Patentinhaber : ALFRED TEVES GmbH
Guerickestrasse 7 Postfach 90 01 20
D-6000 Frankfurt am Main (DE)

(72) Erfinder : Haar, Lucas Heinz
Gelber Weg 4
D-6350 Bad Nauheim (DE)

(74) Vertreter : Frigger, Heinz
c/o ALFRED TEVES GMBH Guerickestrasse 7
D-6000 Frankfurt/Main 90 (DE)

**Beschreibung**

Die Erfindung betrifft einen pneumatischen Kraftverstärker, insbesondere für hydraulische Kraftfahrzeugbremsanlagen, mit einem an einem Geberzylinder befestigten Verstärkergehäuse, einem aus einer Ruhestellung in Richtung auf den Geberzylinder zu bewegbaren Verstärkerkolben, einer vom Verstärkerkolben getragenen Ventileinrichtung zur Steuerung des in einer Arbeitskammer herrschenden Drucks und einer Reaktionseinrichtung, die bei Betätigung die an einer mit den Steuerelement der Ventileinrichtung verbundenen, aus dem Verstärkergehäuse herausgeführten Betätigungsstange ausgeübte Kraft mit der vom Verstärkerkolben abgegebenen Kraft in einem vorbestimmten Verhältnis addiert und beide Kräfte zum Kolben des Geberzylinders leitet, wobei vom Kolben des Geberzylinders ein Kraftübertragungselement bewegbar ist, axial in das Verstärkergehäuse hineinragt und am Kraftübertragungselement ein Arm abgestützt ist, der sich quer vom Kraftübertragungselement bis zur parallel zum Kraftübertragungselement angeordneten und seitlich neben dem Geberzylinder aus dem Verstärkergehäuse herausgeführten Betätigungsstange erstreckt und der die an der Betätigungsstange eingeleitete Betätigungskraft auf das Kraftübertragungselement überträgt. Dieser Stand der Technik ist aus der Patentschrift GB-A-860 516 bekannt.

Bei einem bekannten Kraftverstärker (DE-A-2 922 299) ragt die Betätigungsstange auf der dem Geberzylinder abgewandten Seite aus dem Verstärkergehäuse heraus und wird zur Betätigung des Kraftverstärkers in das Verstärkergehäuse hineingedrückt. Das Verstärkergehäuse ist auf der Seite der Betätigungsstange an einer Bodenplatte eines Fahrzeuges befestigt. Diese Anordnung bringt es mit sich, daß das Verstärkergehäuse neben den Druckkräften auch durch die an der Betätigungsstange eingeleiteten Betätigungskraft belastet ist. Um diese Kräfte bei möglichst geringem Gewicht des Verstärkergehäuses übertragen zu können, ist in seinem Inneren ein geschlitztes Rohr vorgesehen, das die beiden Stirnwände des Verstärkergehäuses miteinander verbindet und die zwischen Geberzylinder und Gehäusebefestigung auftretenden Kräfte überträgt. Diese Bauart ist jedoch aufwendig und teuer. Sie vermindert außerdem die wirksame Arbeitsfläche des Verstärkerkolbens.

Es ist weiterhin ein Kraftverstärker für eine hydraulische Kraftfahrzeug-Bremsanlage bekannt (DE-A-543 640), bei dem das Verstärkergehäuse am offenen Ende des Geberzylinders befestigt ist und der Verstärkerkolben über eine Druckstange starr mit einem ersten Kolben des Geberzylinders verbunden ist. Die Betätigungsstange ragt aus dem Boden des Geberzylinders heraus und ist mit einem zweiten Kolben verbunden, der im Abstand vom ersten Kolben des Geberzylinders angeordnet ist. Zwischen dem Ende der Betätigungsstange und dem Bremspedal ist die Ventileinrichtung angeordnet, die über eine parallel zum Geberzylinder verlaufende Schlauchleitung mit einer Arbeitskammer des Kraftverstärkers verbunden ist. Eine Reaktionseinrichtung ist bei diesem bekannten Kraftverstärker nicht vorgesehen. Ein wesentlicher Nachteil dieses bekannten Kraftverstärkers besteht darin, daß seine Steuerung rein wegabhängig ist, so daß der Fahrer die Stärke der tatsächlich erzeugten Bremskraft nur indirekt über die Fahrzeugverzögerung erfassen kann und die Gefahr einer Überbremsung des Fahrzeuges besteht. Weiterhin ist von Nachteil, daß diese Anordnung eine Verwendung heute üblicher Zweikreis-Geberzylinder nicht erlaubt.

Bei einem weiteren bekannten Kraftverstärker für hydraulische Kraftfahrzeug-Bremsanlagen (US-A-2 900 962) ist das Verstärkergehäuse am Boden des Geberzylinders angeordnet und der Verstärkerkolben durch ein Rohr mit dem Kolben des Geberzylinders verbunden. Im Inneren des Rohres ist die Betätigungsstange angeordnet. Die Betätigungsstange durchdringt den Kolben des Geberzylinders und das Rohr und stützt sich über eine durch Hebel gebildete Reaktionseinrichtung am Verstärkerkolben ab. Bei diesem bekannten Kraftverstärker ist das Verstärkergehäuse nur durch die Drücke belastet, die in seinem Inneren herrschen. Die an der Betätigungsstange eingeleiteten Druckkräfte werden unmittelbar von dem Gehäuse des Geberzylinders aufgenommen und an der Gehäusebefestigung abgestützt. Nachteilig ist jedoch der erhebliche Bauaufwand des Geberzylinders und die unvermeidliche Vergrößerung seines Durchmessers, so daß ein Teil der mit dieser Bauart erzielbaren Verminderung des Gewichts des Verstärkergehäuses durch das größere Gewicht des Geberzylinders aufgezehrt wird.

Schließlich ist der eingangs bereits erwähnte mit Druckluft arbeitender Bremskraftverstärker bekannt (GB-A-860 516), bei dem der Geberzylinder an die eine Stirnwand eines zylindrischen Druckluftreservoirs angeflanscht ist, wobei diese Stirnwand außerdem eine muldenförmige Vertiefung aufweist, in der der Verstärkerkolben und die Ventileinrichtung angeordnet sind. Der Kolben des Geberzylinders stützt sich über einen Druckbolzen, dessen eines Ende gabelförmig gestaltet ist, am Verstärkerkolben ab. Im gabelförmigen Ende des Druckbolzens ist ein Ventilglied gehalten, das über eine Feder auf ein Tellerventil einwirkt, das den Druckluftdurchgang vom Reservoir zur Arbeitskammer vor dem Verstärkerkolben kontrolliert. Das Ventilglied ist über einen Hebel verschiebbar, dessen eines Ende an der dem Geberzylinder zugewandten Stirnwand gelagert ist und dessen anderes Ende an eine Stange angelenkt ist, die vom Bremspedal verschiebbar ist. Am Verstärkerkolben ist ein dosenförmiger Druckzylinder angebracht, dessen Innenraum von einer Membran in zwei Kammern aufgeteilt ist, wobei die Membran mit dem Ventilglied in Verbindung steht. Die eine Kammer wird vom Druck in der Arbeitskammer vor dem Verstärkerkolben beaufschlagt, so daß eine Reaktionskraft über die Membrane auf das Ventilglied einwirkt, wenn der Verstärker durch Verschieben der Stange betätigt wird. Ein Nachteil dieses druckluftbetätigten Verstärkers besteht darin, daß infolge des mit dem Ventilglied gekoppelten Hebels eine Übersetzung zwischen der mit dem Bremspedal verbundenen Stange und dem Ventilglied bzw. dem Druckbolzen wirksam ist.

Der Erfindung liegt die Aufgabe zugrunde, einen Kraftverstärker der eingangs genannten Art zu schaffen, bei dem das Verstärkergehäuse von den Betätigungskräften entlastet ist, der sich durch einfachen Aufbau und geringe Herstellkosten auszeichnet und bei dem eine Hebelübersetzung zwischen der Betätigungsstange und dem Kolben des Geberzylinders nicht erforderlich ist.

Diese Aufgabe wird erfindungsgemäß dadurch gelöst, daß das Kraftübertragungsglied eine Hülse ist, die in der Zylinderbohrung des Geberzylinders geführt ist und mit einem Ende einen Zapfen am Ende des Kolbens des Geberzylinders umgreift und mit dem anderen Ende eine am Verstärkerkolben befestigte Stange aufnimmt, die der Halterung und Führung des Verstärkerkolbens dient.

Der erfindungsgemäße Kraftverstärker zeichnet sich durch eine geringe axiale Baulänge aus. Während bei herkömmlichen Kraftverstärkern die axiale Baulänge durch das Dreifache des Arbeitshubs bestimmt wird, ist bei dem erfindungsgemäßen Kraftverstärker durch die Anordnung der Betätigungsstange parallel zum Geberzylinder und durch den Verzicht auf eine zwischengeschaltete Hebelübersetzung nur der zweifache Arbeitshub für die axiale Baulänge maßgebend.

Außerdem wird durch diese Ausgestaltung die Herstellung und der Einbau des Kraftübertragungselements erleichtert. Eine vorteilhafte Ausgestaltung des erfindungsgemäßen Kraftverstärkers mit sehr kurzer Baulänge wird dadurch erzielt, daß das Kraftübertragungselement starr mit dem Arm verbunden und gegenüber dem Kolben des Geberzylinders beweglich ist. Die Reaktionseinrichtung kann bei dieser Ausgestaltung innerhalb des Kraftübertragungselementes angeordnet sein und benötigt daher keinen zusätzlichen Bauraum. Hierbei ergibt sich ein einfacher Aufbau, wenn die Reaktionseinrichtung zwischen einer Anschlagfläche des Kraftübertragungselementes und dem Verstärkerkolben einerseits und dem Kolben des Geberzylinders andererseits angeordnet ist. Die Reaktionseinrichtung kann dabei vorteilhaft aus einer Gummischeibe bestehen, die innerhalb des Kraftübertragungselementes liegt und mit einer Stirnfläche am Zapfen des Kolbens des Geberzylinders und mit der anderen Stirnfläche an einem in der Hülse befestigten Ring und an dem Kopf der Stange des Verstärkerkolbens anlegbar ist. Bei dieser Ausgestaltung bildet die Gummischeibe gleichzeitig die erforderliche Dichtung zwischen dem Kolben des Geberzylinders und dem Kraftübertragungselement.

Eine andere vorteilhafte Ausgestaltung der Erfindung kann darin bestehen, daß der Arm an dem starr mit dem Kolben des Geberzylinders verbundenen Kraftübertragungselement beweglich gelagert ist. Das Kraftübertragungselement bildet dann eine Druckstange, die die Kräfte von der Reaktionseinrichtung zum Kolben des Geberzylinders überträgt. Hierbei kann eine Vereinfachung des erfindungsgemäßen Kraftverstärkers dadurch erzielt werden, daß der Arm ein schwenkbar gelagerter Hebel ist, der die Reaktionseinrichtung bildet. Vorzugsweise ist der Hebel durch eine Platte gebildet, die mit einer mittigen Öffnung auf der Stange des Arbeitskolbens gelagert ist und mit einem gegabelten Ende die Betätigungsstange umgreift. Auf diese Weise wird eine klemmfreie Lagerung für den Hebel geschaffen, die keine zusätzlichen Bauelemente erfordert. Um eine einwandfreie Bewegung des Hebels zu gewährleisten und die Länge der Hebelarme genau festlegen zu können, weist die Platte im Bereich der Abstützstellen am Kraftübertragungselement, Verstärkerkolben und Betätigungsstange aus der Plattenebene vorspringende Querrippen auf, die die Lagerflächen bilden.

Die Schwenkbewegung des Hebels in Betätigungsrichtung ist vorzugsweise durch einen Anschlag begrenzt. Hierdurch wird eine Betätigung des Geberzylinders auch dann sichergestellt, wenn der Kraftverstärker ausfällt oder unzureichend mit Druckmittel versorgt wird. Der Anschlag kann vorteilhaft durch einen weiteren, starr mit dem Kraftübertragungselement verbundenen zweiten Arm gebildet sein, dessen Ende die Betätigungsstange umgreift. Vorteilhaft bildet der weitere Arm zusätzlich einen Anschlag in Bremslöserichtung für die Betätigungsstange.

Um zu vermeiden, daß bei normalem Betrieb die Führung des Kraftübertragungselementes im Geberzylinder und die Führung des Verstärkerkolbens im Kraftübertragungselement durch Querkräfte belastet werden, ist der Verstärkerkolben erfindungsgemäß in seinem Flächenschwerpunkt am Hebel abgestützt. Auf diese Weise geht die resultierende Kraft aus dem auf den Verstärkerkolben einwirkenden Druck durch die Abstützfläche am Hebel, so daß kein Kippmoment entstehen kann. Auch der Hebel verursacht kein Kippmoment, solange Verstärkerkraft und Betätigungskraft im Gleichgewicht sind, da die Summe beider Kräfte von dem Hebel in der Mittelachse des Kraftübertragungselementes auf dieses übertragen werden.

Gemäß einer vorteilhaften Weiterbildung der Erfindung ist das mit der Betätigungsstange zusammenwirkende Ende des Hebels in Bremslöserichtung an einer Feder abgestützt und in der Ruhestellung des Verstärkers ist zwischen den einander benachbarten Abstützflächen an Hebel und Betätigungsstange ein Spiel vorhanden, dessen Größe dem Steuerweg zur Betätigung des Verstärkers entspricht. Durch diese Feder wird der Hebel der Anfangsphase der Betätigung des Kraftverstärkers an einer Einwirkung auf die Betätigungsstange gehindert, so daß das Ansteuern des Kraftverstärkers nur geringe Betätigungskraft erfordert. Die Feder kann auf einfache Weise durch einen Wulst des die Betätigungsstange umgreifenden, in der Öffnung des Verstärkerkolbens angeordneten Dichtrings gebildet sein.

Eine besonders einfache und vorteilhafte Ausgestaltung der Erfindung besteht darin, daß die Betätigungsstange hohl ist und mit ihrem verstärkerseitigen Ende den Steuerkolben der Ventileinrichtung bildet. Die Zufuhr des Druckmittels zur Betätigung des Kraftverstärkers kann dabei durch die hohle Betätigungsstange erfolgen, so daß eine zusätzliche Anschlußleitung entfällt. Ein besonders einfacher Aufbau des Ventilgehäuses kann gemäß einer weiteren Ausgestaltung der Erfindung dadurch erzielt werden, daß die Betätigungsstange den Verstärkerkolben durchdringt und die Ventileinrichtung koaxial zur Betätigungsstange auf der dem Geberzylinder abgekehrten Seite des Verstärkerkolbens angeordnet ist. Die Betätigungsstange ist vorzugsweise in einem elastischen Dichtring in der Wand des Verstärkerkolbens geführt und das Ventilgehäuse umgibt das Ende der Betätigungsstange mit radialem Spiel. Durch diese Maßnahme werden enge Herstellungstoleranzen vermieden, und es wird eine leichte Verschiebbarkeit der Betätigungsstange gewährleistet. Die Befestigung des Ventilgehäuses am Verstärkerkolben erfolgt vorzugsweise durch einen axial aus der Stirnfläche des Ventilgehäuses hervorstehenden Zapfen, der in einer Öffnung im Verstärkerkolben befestigt ist. Erfindungsgemäß verläuft dabei in dem Zapfen ein Verbindungskanal von der Ventileinrichtung zur Niederdruckkammer.

Um eine Ablenkung der Betätigungsstange zu ermöglichen, die eine Bewegung der Betätigungsstange quer zu ihrer Längsachse zuläßt, kann gemäß einem weiteren Vorschlag der Erfindung das den Steuerkolben bildende Ende der Betätigungsstange im Ventilgehäuse geführt und das Ventilgehäuse schwenkbar am Verstärkerkolben gelagert sein. Das Ventilgehäuse kann dann den Bewegungen der Betätigungsstange folgen, wobei die für die Funktion der Ventileinrichtung erforderliche Ausrichtung von Ventilgehäuse und Betätigungsstange zueinander erhalten bleibt. Eine schwenkbare Lagerung des Ventilgehäuses wird auf einfache Weise dadurch erreicht, daß zwei Zapfen des Ventilgehäuses in elastische Ringe in der Wand des Verstärkerkolbens eingreifen. Vorzugsweise liegt ein Zapfen in der Mittelachse des Ventilgehäuses und bildet eine Hülse zur Führung der Betätigungsstange.

In einer bevorzugten Ausgestaltung der Erfindung ist die Betätigungsstange in einer achsparallelen Bohrung des Geberzylinders geführt. Durch diese Maßnahme werden Querkräfte, die von einem mit der Betätigungsstange verbundenen Betätigungsvorrichtung herrühren können, unmittelbar vom Gehäuse des Geberzylinders aufgenommen und von der Führung des Kraftübertragungselementes ferngehalten. Dabei ist es vorteilhaft, wenn die Bohrung im Geberzylinder eine Einlaßkammer für das Druckmittel zur Betätigung des Kraftverstärkers bildet, wobei die hohe Betätigungsstange innerhalb der Einlaßkammer eine seitliche Eintrittsöffnung für das Druckmittel aufweist. Diese Anordnung der Einlaßkammer hat weiterhin den Vorteil, daß das Druckmittel über einen gehäusefesten Anschluß zugeführt werden kann, so daß der Kraftverstärker auf einfache Weise auch mit Druckluft betrieben werden kann.

Soll die Betätigungsstange gegenüber dem Geberzylinder und dem Verstärkergehäuse quer zu ihrer Längsachse bewegbar sein, so kann ihre Abdichtung in der Wand des Verstärkergehäuses erfindungsgemäß durch eine Rollmembran erfolgen, die in das Verstärkergehäuse hineinragt, eine Einlaßkammer für das Druckmittel bildet und an ihrem offenen Ende durch einen Luftfilter verschlossen ist. Diese Weiterbildung der Erfindung eignet sich besonders für die Zuführung der Atmosphärenluft bei Kraftverstärkern, die mit Unterdruck betrieben werden.

Eine einfache Lagerung der Betätigungsstange außerhalb des Verstärkergehäuses kann erfindungsgemäß auch durch eine schwenkbar am Geberzylinder angelenkte Lasche erfolgen, die mit der Betätigungsstange gelenkig verbunden ist.

Die Erfindung wird anhand einiger bevorzugter Ausführungsbeispiele näher erläutert, die in der Zeichnung dargestellt sind.

Es zeigen :

Figur 1 einen Längsschnitt durch einen Kraftverstärker mit einer Gummischeibe als Reaktionseinrichtung,

Figur 2 einen Längsschnitt durch einen Kraftverstärker mit einem Hebel als Reaktionseinrichtung,

Figur 3 Ansicht des Hebels des Kraftverstärkers gem. Fig. 2,

Figur 4 eine Seitenansicht eines weiteren Ausführungsbeispiels eines Kraftverstärkers und

Figur 5 einen Ausschnitt der Lagerung der Betätigungsstange des Kraftverstärkers gemäß Fig. 4.

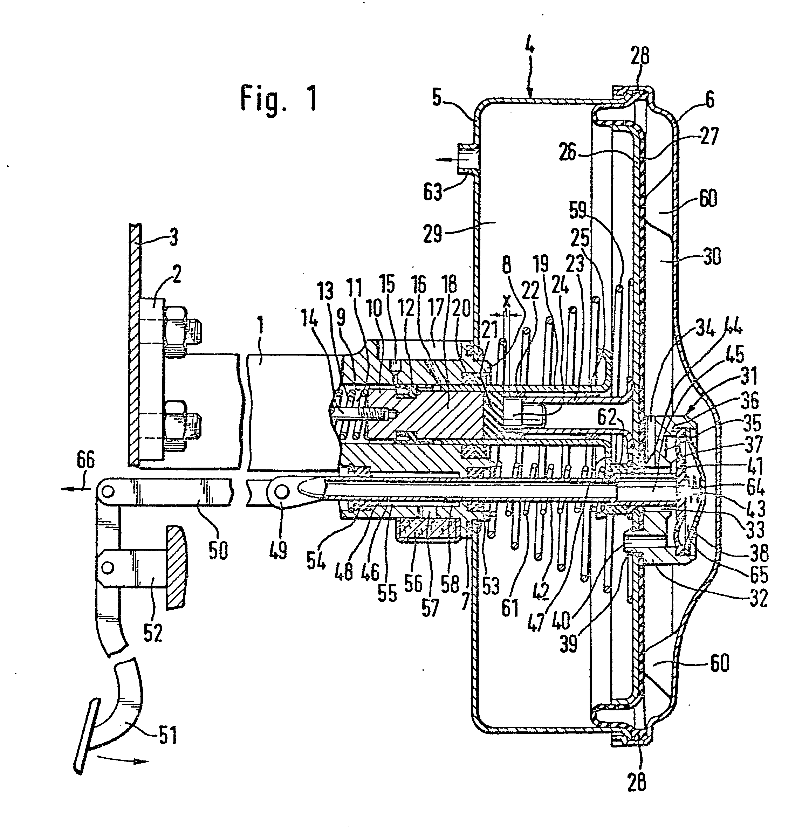

Der in Fig. 1 dargestellte Kraftverstärker ist für einen hydraulische Bremsanlage eines Kraftfahrzeugs vorgesehen. Er umfaßt einen hydraulischen Geberzylinder 1, der mit einem am Zylinderboden angeordneten Befestigungsflansch 2 an einer den Motorraum vom Fahrgastraum trennenden Wand 3 des Kraftfahrzeugs angeschraubt ist. An seinem offenen Ende trägt der Geberzylinder 1 ein Verstärkergehäuse 4, das aus den Gehäuseschalen 5 und 6 zusammengesetzt ist. Die Gehäuseschale 5 ist an einem Flansch 7 des Geberzylinders 1 befestigt und weist eine mittige Öffnung auf, in die das Ende 8 des Geberzylinders 1 hineinragt.

Der Geberzylinder 1 ist in herkömmlicher Weise als Tandemzylinder ausgebildet. Es wurde daher auf eine Schnittdarstellung seines linken Abschnitts verzichtet. Das Ende 8 des Geberzylinders 1 ist geschnitten dargestellt, um die Abweichungen von der üblichen Ausgestaltung deutlich zu machen. Dort ist in der Zylinderbohrung 9 ein Kolben 10 angeordnet, der zum Druckraum 11 mittels einer Manschette 12 abgedichtet ist. Eine Rückstellfeder 13 hält den Kolben 10 mittels einer Stange 14 an einem im Geberzylinder 1 ausgebildeten, nicht dargestellten Anschlag. Eine Ausgleichsbohrung 15 und eine Nachlaufbohrung 16 verbinden die Zylinderbohrung 9 mit einem Anschluß 17 für einen Nachfüllbehälter.

Der Kolben 10 hat an seinem verstärkerseitigen Ende einen Zapfen 18, der eine Gleitführung für eine zylindrische Hülse 19 bildet. Der Außendurchmesser der Hülse 19 ist dem Durchmesser der Zylinderbohrung 9 angepaßt. Die Hülse ragt mit ihrem linken Ende in die Zylinderbohrung 9 hinein. Eine Dichtungsanordnung 20 am Ende 8 des Geberzylinders 1 sorgt für eine druckmitteldichte Trennung von Zylinderbohrung 9 und Verstärkergehäuse 4 an der Mantelfläche der Hülse 19.

In der Hülse 19 ist eine Gummischeibe 21 angeordnet, die an dem Zapfen 18 anliegt. Auf der dem Zapfen abgekehrten Seite der Gummischeibe sind ein in der Hülse 19 befestiger Reaktionsring 22 und eine Stange 23 angeordnet, die mittels eines Gleitrings 25 in der Hülse verschiebbar gelagert ist. Der Kopf 24 am einen Ende der Stange 23 durchgreift gleitend den Reaktionsring 22 und liegt mit seiner Stirnfläche an der Gummischeibe 21 an. Zwischen dem Reaktionsring 22 und der Gummischeibe 21 ist in der dargestellten Ruhestellung des Kraftverstärkers ein Spiel x vorgesehen. Die Gummischeibe 21 bildet mit den sie umgebenden Bauteilen die Reaktionsreinrichtung des Kraftverstärkers. Gleichzeitig dichtet sie den Spalt zwischen der Hülse 19 und dem Zapfen 18 zum Verstärkergehäuse hin ab.

An dem aus der Hülse 19 herausragende Ende der Stange 23 ist der Verstärkerkolben 26 befestigt, der eine Rollmembran 27 trägt, deren Außenrand 28 zwischen den Gehäuseschalten 5, 6 dicht eingespannt ist. Der Verstärkerkolben 26 unterteilt das Verstärkergehäuse in eine Niederdruckkammer 29 und eine Arbeitskammer 30. Auf seiner der Arbeitskammer 30 zugekehrten Seite trägt der Verstärkerkolben 26 eine Ventileinrichtung 31 zur Steuerung des Druckes in der Arbeitskammer 30. Das Gehäuse 32 der Ventileinrichtung 31 wird durch eine Ringscheibe gebildet, deren Mittelbohrung 33 über eine radiale Nut 34 mit der Arbeitskammer 30 verbunden ist. Auf der dem Verstärkerkolben 26 abgekehrten Seite ist die Mittelbohrung 33 durch zwei ringförmige Stufenflächen 35, 36 erweitert. Der Innenrand der Stufenfläche 35 bildet einen Ventilsitz 37. An der Stufenfläche 36 wird der Außenrand eines membranartigen Verschlußelementes 41 von einem in dem erweiterten Ende der Mittelbohrung 33 befestigten Deckel 38 druckdicht gehalten. Das Gehäuse 32 ist an dem Verstärkerkolben 26 durch einen Zapfen 39 befestigt, der eine durchgehende Öffnung in der Rollmembran 27 und dem Verstärkerkolben 26 durchgreift und mit vorspringenden Krallen am Verstärkerkolben 26 gehalten ist. Ein zweiter Zapfen gleicher Ausbildung ist in der Zeichnung nicht sichtbar. Durch den Zapfen 39 führt ein axialer Kanal 40, der in der Stufenfläche 35 radial außerhalb des Ventilsitzes 37 mündet.

In der dargestellten Stellung der Ventileinrichtung ist der Niederdruckkanal 29 durch den Kanal 40, die Mittelbohrung 33 und die Nut 34 mit der Arbeitskammer 30 verbunden. Das Verschlußelement 41 liegt an einer Dichtfläche an dem in die Mittelbohrung hineinragenden, erweiterten Ende 45 einer Betätigungsstange 42 an und wird in dieser Lage von einer am Deckel 38 abgestützten Druckfeder 43 gehalten. Die Betätigungsstange 42 ist hohl und bildet einen Kanal, durch den das Druckmedium zur Betätigung des Kraftverstärkers, die Atmosphärenluft, der Ventileinrichtung 31 zugeführt wird. Das Ende 45 durchgreift eine Öffnung im Verstärkerkolben 26 und ist in dieser Öffnung durch einen einstückig mit der Rollmembran ausgebildeten Dichtring 44 gleitend geführt. Mit einem dünneren Abschnitt 46 durchgreift die Betätigungsstange 42 eine Öffnung in einem an der Hülse 19 ausgebildeten Arm 47, an dem sie sich in Betätigungsrichtung mit der durch das erweiterte Ende 45 gebildeten Stufenfläche abstützt. Der Abschnitt 46 durchquert die Niederdruckkammer 29 und ist außerhalb des Verstärkergehäuses 4 in einer achsparallelen Bohrung 48 des Geberzylinders 1 geführt. Am Ende 49 der Betätigungsstange 42 ist eine Zuglasche 50 angelenkt, dit mit einem Bremspedal 51 verbunden ist, das in einem fahrzeugfesten Lagerbock 52 schwenkbar gelagert ist.

Die Bohrung 48 ist nur Niederdruckkammer 29 hin mit einer Gleitdichtung 53 abgedichtet, die den Abschnitt 46 der Betätigungsstange umspannt. Im entgegengesetzten Ende der Bohrung 48 ist Gleitführungsring 54 angeordnet. Der mittlere Bereich der Bohrung 48 hat einen größeren Durchmesser, als der Abschnitt 46 der Betätigungsstange 42, wodurch ein Ringraum entsteht, der eine Einlaßkammer 55 für die Atmosphärenluft bildet, die über einen Luftfilter 56 und eine Einlaßbohrung 57 in die Einlaßkammer 55 gelangt. Die Betätigungsstange hat innerhalb der Einlaßkammer 55 eine Öffnung 58, durch die die Luft in den Innenraum der Betätigungsstange gelangt. Das Ende 49 ist luftdicht verschlossen.

In Fig. 1 ist der Kraftverstärker in seiner Ruhelage dargestellt.

Der Verstärkerkolben 26 wird von einer Rückstellfeder 50 gegen Anschläge 60 an der Gehäuseschale 6 gedrückt. Eine weitere Rückstellfeder 61 stützt sich an dem Arm 47 ab und hält diesen in Anlage an einem Anschlagring 62, der auf dem Ende 45 der Betätigungsstange 42 gelagert ist und sich an dem Dichtring 44 abstützt. Über einen Anschluß 63 ist die Niederdruckkammer 29 mit einer Niederdruckquelle, vorzugsweise dem Ansaugkanal des Fahrzeugmotors verbunden. Der Druck in der Niederdruckkammer 29 pflanzt sich über die Ventileinrichtung 31 in die Arbeitskammer 30 fort. Die Atmosphärenluft gelangt durch die Betätigungsstange 42 an das Verschlußelement 41 und durch eine Öffnung 64 in den Raum 65 zwischen dem Verschußelement 41 und dem Deckel 38. Hierdurch bewirkt die Atmosphärenluft eine Unterstützung der Druckfeder 43, so daß diese leicht ausgebildet sein kann.

Der Kraftverstärker gemäß Fig. 1 arbeitet wie folgt :

Wird das Bremspedal 51 betätigt, so bewegt sich die Betätigungsstange 42 in Richtung des Pfeils 66, wobei sie gleichzeitig über den Arm 47 die Hülse 19 in die Zylinderbohrung 9 hineinbewegt. Das Verschlußelement 41 folgt der Bewegung der Betätigungsstange 42, bis es am Ventilsitz 37 zur Anlage kommt und dadurch Niederdruckkammer 29 und Arbeitskammer 30 voneinander trennt. In dieser Stellung der Betätigungsstange 42 ist das Spiel x zwischen der Gummischeibe 21 und dem Reaktionsring 22 etwa zur Hälfte aufgezehrt. Mit dem Fortschreiten der Betätigung hebt das Ende 45 der Betätigungsstange 42 vom Verschlußelement 41 ab, wodurch Atmosphärenluft über die Mittelbohrung 33 und die Nut 34 in die Arbeitskammer gelangt. Der Reaktionsring 22 kommt an der Gummischeibe 21 zur Anlage und der Druckaufbau in der Arbeitskammer 30 beginnt, den Arbeitskolben 26 in Richtung auf den Geberzylinder 1 zu verschieben. Dabei stützt sich der Arbeitskolben 26 über den Kopf 24 und die Betätigungsstange 42 über den Reaktionsring 22 an der Gummischeibe 21 ab, die die Kräfte auf den Kolben 10 überträgt, wodurch dieser entgegen der Kraft der Rückstellfeder 13 in den Geberzylinder 1 hineinbewegt wird. Das Ausmaß der Betätigung wird durch die Bewegung der Betätigungsstange 42 über das Bremspedal 51 und die an der Betätigungsstange 42 ausgeübte Betätigungskraft bestimmt. Wird die Betätigungsstange 42 angehalten, so verschiebt der in der Arbeitskammer 30 herrschende Druck den Verstärkerkolben 26 noch so weit, bis das Verschlußelement 41 am Ende 45 zur Anlage kommt und dadurch die Zufuhr von Atmosphärenluft unterbricht.

Beim Lösen des Bremspedals wird von der Rückstellfeder 61 über der Arm 47 die Hülse 19 und die Betätigungsstange 42 entgegen der Pfeilrichtung 66 so weit nach rechts verschoben, bis der Arm 47 am Anschlagring 62 anliegt. Hierdurch wird die Ventileinrichtung 31 in die in Fig. 1 dargestellte Stellung gebracht, so daß zwischen der Arbeitskammer 30 und der Niederdruckkammer 29 ein Druckausgleich stattfinden kann. Die Rückstellfedern 13, 53, 61 bewirken dann unterstützt von dem Druck im Druckraum 11 ein Zurückschieben aller Teile in die dargestellte Ruhestellung.

Im Falle einer Störung der Druckmittelversorgung des Kraftverstärkers, beispielsweise durch Unterbrechung der Verbindung zur Niederdruckquelle, erfolgt die Betätigung des Kolbens 10 über die Betätigungsstange 42, den Arm 47 und die Hülse 19, die sich dabei mit ihrem geberzylinderseitigen Ende unmittelbar an dem Kolben 10 abstützt. Die Führung der Betätigungsstange 42 und der Hülse 19 am Geberzylinder 1 ist dabei so bemessen, daß Klemmkräfte vermieden werden. Der Verstärkerkolben 26 kann dabei in seiner Ruhestellung an den Anschlägen 60 verbleiben, so daß die Rückstellfeder 59 nicht gespannt werden muß.

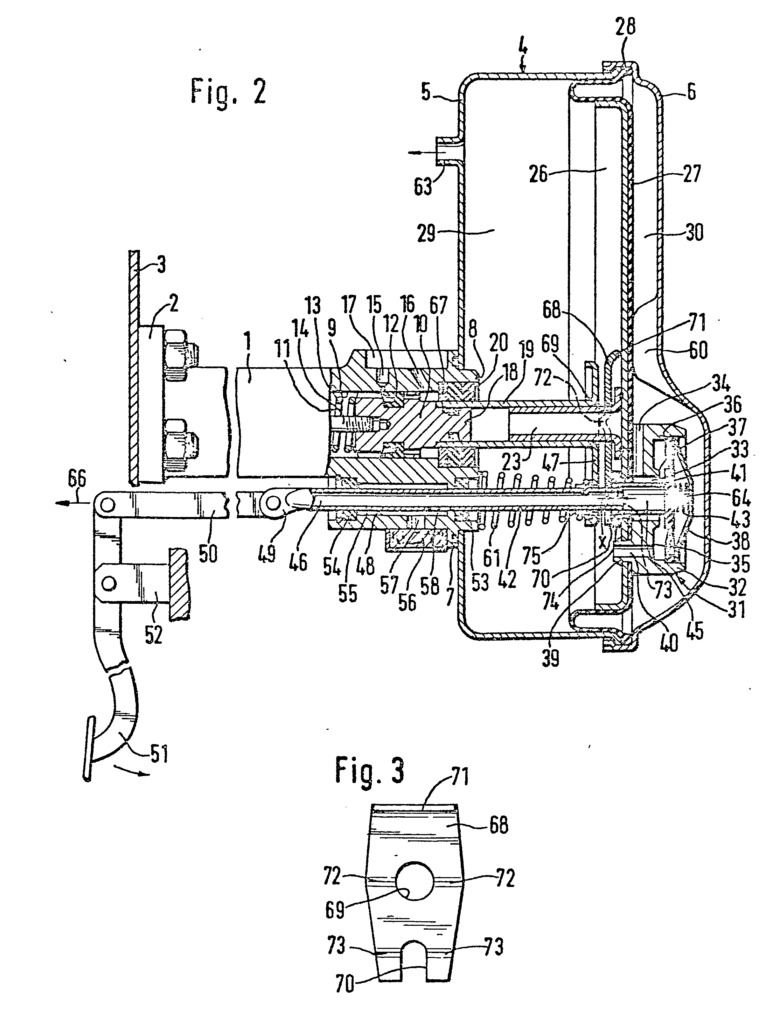

Der in Fig. 2 dargestellte Bremskraftverstärker stimmt in vielen Teilen mit dem Bremskraftverstärker gemäß Fig. 1 überein. Soweit gleiche Bezugszeichen wie in Fig. 1 verwendet wurden, ist daher auch die vorstehende Beschreibung für dieses Ausführungsbeispiel zutreffend.

Bei dem Kraftverstärker nach Fig. 2 ist die Hülse 19 starr an dem Zapfen 18 des Kolbens 10 befestigt, wobei ein Dichtring 67 den Spalt zwischen der Hülse 19 und dem Zapfen 18 abdichtet. Zwischen dem Verstärkerkolben 26 und dem Arm 47 an der Hülse 19 ist ein durch eine Platte gebildeter Hebel 68 angeordnet, der eine mittige Öffnung 69 hat, durch die die Stange 23 zur Lagerung des Hebels 68 hindurchgreift. Das eine Ende des Hebels 68 bildet eine Gabel 70, die den Abschnitt 46 der Betätigungsstange 42 umgreift. Das andere Ende des Hebels 68 ist zum Verstärkerkolben 26 hin abgebogen, wodurch eine Querrippe 71 entsteht, mit der der Hebel 68 am Verstärkerkolben 26 anliegt. Mit einer weiteren, die Öffnung 69 kreuzenden Querrippe 72 liegt der Hebel 68 an dem durch den Arm 47 gebildeten Ende der Hülse 19 an, und eine an der Gabel 70 ausgebildete Querrippe 73 bildet die Anlagefläche für die Stufenfläche an dem erweiterten Ende 45 der Betätigungsstange 42. Die Querrippen 71, 72, 73 sind zueinander parallel. Der Hebel 68 bildet die Reaktionseinrichtung des Kraftverstärkers und überträgt die Betätigungskräfte von der Betätigungsstange 42 und dem Verstärkerkolben 26 auf die Hülse 19.

Zwischen der Gabel 70 und dem Verstärkerkolben 26 ist ein Gummiring 74 angeordnet, an dem der Hebel 68 mit seiner Gabel 70 in der dargestellten Ruhestellung anliegt. Der Gummiring 74 bewirkt, daß zwischen der Stufenfläche an der Betätigungsstange und der Querrippe 73 ein Spiel x vorhanden ist, das so groß bemessen ist, daß das Ende 45 der Betätigungsstange 42 beim Betätigen des Bremspedals 51 vom Verschlußelement 41 abhebt, bevor die Stufenfläche der Betätigungsstange 42 an der Querrippe 73 zur Anlage kommt. Hierdurch wird ein Ansteuern des Kraftverstärkers mit geringer Betätigungskraft ermöglicht, da im Anfangsstadium der Betätigung die an der Gabel 70 des Hebels 68 auftretenden Kräfte zunächst von dem Gummiring 74 aufgenommen werden. Treten bei stärkerer Betätigung höhere Kräfte am Hebel 68 auf, so wird der Gummiring 74 zusammengedrückt und die Querrippe 73 kommt an der Betätigungsstange 42 zur Anlage. Ab diesem Stadium der Betätigung wird das Verhältnis der an der Betätigungsstange eingeleiteten Betätigungskraft zu der vom Verstärkerkolben ausgeübten Verstärkerkraft durch die Länge der Hebelarme des Hebels 68 bestimmt. Um die Betätigungsstange 42 bei diesem Ausführungsbeispiel in die dargestellte Ruhelage bewegen zu können, stützt sich die Rückstellfeder 61 an einem Federteller 75 ab, der mit der Betätigungsstange 42 starr verbunden ist. Die Endstellung der Betätigungsstange 42 wird durch das Anschlagen des Federtellers 75 an dem Arm 47 festgelegt.

Durch die Verwendung des Hebels 68 werden bei dem Kraftverstärker nach Fig. 2 Querkräfte an der Hülse 19 vermieden. Die Führung der Hülse 19 ist daher im normalen Betrieb keinen ungewöhnlichen Beanspruchungen unterworfen. Dies wird dadurch erreicht, daß der Hebel 68 die an seinen Enden eingeleiteten Betätigungskräfte über die die Längsachse der Hülse 19 kreuzende Querrippe 72 zentral in die Hülse 19 einleitet. Weiterhin ist der Verstärkerkolben 26 in seinem Flächenschwerpunkt an der Querrippe 71 abgestützt, so daß auch durch die Führung der Stange 23 in der Hülse 19 keine Querkräfte hervorgerufen werden.

Bei Ausfall der Antriebsenergie des Kraftverstärkers kommt der Hebel 68 an dem Arm 47 zur Anlage, so daß der Kolben 10 unmittelbar durch die Betätigungsstange 42 betätigt werden kann. Die Führung der Hülse 19 über den Kolben 10 reicht jedoch aus, um die bei einer solchen Notbetätigung auftretenden Querkräfte klemmfrei abzustützen.

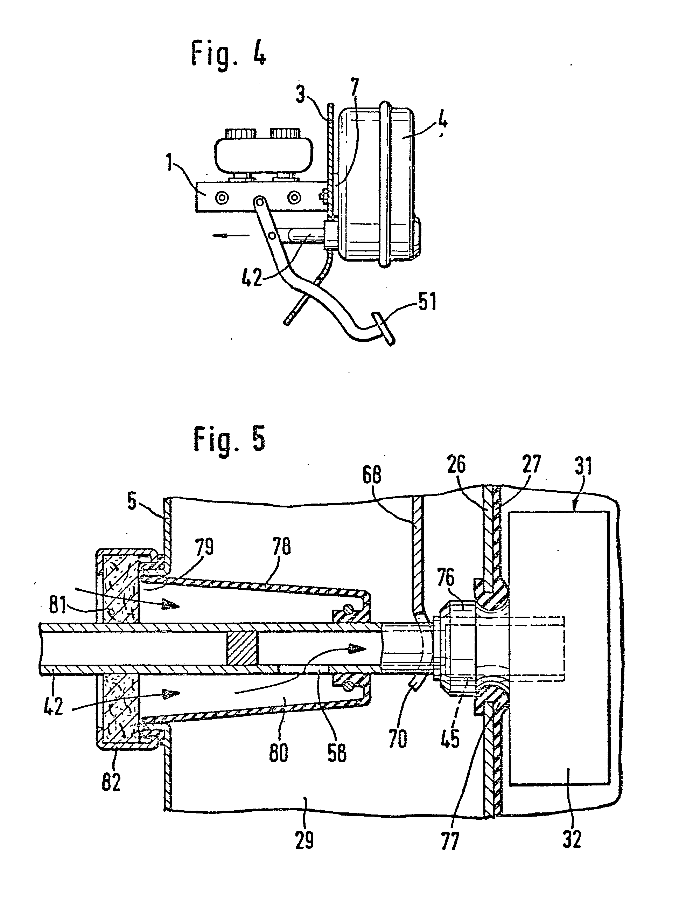

Fig. 4 zeigt ein weiteres Ausführungsbeispiel eines Kraftverstärkers zur Betätigung einer hydraulischen Fahrzeugbremse. Bei diesem Ausführungsbeispiel befindet sich das Verstärkergehäuse 4 im Fahrgastraum und der Geberzylinder 1 im Motorraum. Der Kraftverstärker ist mit der Rückseite des Flansches 7 des Geberzylinders 1, der zu Befestigung des Verstärkergehäuses 4 dient, an der Wand 3 des Fahrzeugs angeschraubt. Das Bremspedal 51 zur Betätigung des Kraftverstärkers ist an dem Geberzylinder 1 schwenkbar befestigt und die Betätigungsstange 42 ist unmittelbar an dem Bremspedal 51 angelenkt. Diese Anlenkung führt zu einer Schwenkbewegung der Betätigungsstange 42, die durch die in Fig. 5 dargestellte Lagerung der Betätigungsstange 42 und der Ventileinrichtung 31 ermöglicht wird.

Beim dem Ausführungsbeispiel nach Fig. 5 weist das Gehäuse 32 der Ventileinrichtung 31 einen mittigen Zapfen 76 auf, in dessen Mittelbohrung das Ende 45 der Betätigungsstange 42 gleitend geführt und abgedichtet ist. Der Zapfen 76 durchgreift eine Öffnung im Verstärkerkolben 26 und ist durch einen einstückig mit der Rollmembran ausgebildeten Wulst 77 gehalten. Der Wulst 77 erlaubt eine begrenzte Schwenkbewegung des Gehäuses 32. Ein zweiter, in Fig. 5 nicht dargestellter, den Kanal 40 enthaltender Zapfen ist in der gleichen Weise durch einen Wulst im Verstärkerkolben 26 gehalten, so daß beide Zapfen eine in Blickrichtung liegende Schwenkachse für eine Schwenkbewegung des Gehäuses 32 bilden. Durch diese Lagerung kann das Gehäuse 32 den Schwenkbewegungen der Betätigungsstange 42 folgen, so daß die erforderliche Ausrichtung der Ventilsitze am Ende der Betätigungsstange 42 und im Gehäuse 32 erhalten bleibt und die Funktion der Ventileinrichtung gewährleistet ist.

Um der Betätigungsstange 42 an der Eintrittsöffnung in der Gehäuseschale 5 den erforderlichen Bewegungsspielraum zu geben, ist der Durchmesser der Eintrittsöffnung erheblich größer als der Außendurchmesser der Betätigungsstange 42. Zur Abdichtung ist eine Rollmembran 78 vorgesehen, die mit ihrem einen Ende an der Eintrittsöffnung 79 der Gehäuseschale 5 befestigt ist und deren anderes Ende innerhalb der Niederdruckkammer an der Betätigungsstange 42 befestigt ist. Der Innenraum der Rollmembran 78 bildet eine Einlaßkammer 80, in der die Öffnung 58 in der Betätigungsstange 42 angeordnet ist. Der Zutritt der Atmosphärenluft zur Einlaßkammer 80 erfolgt durch ein Luftfilter 81, das mit Hilfe eines Halterings 82 an der Eintrittsöffnung 79 befestigt ist und die Betätigungsstange umschließt. Das Luftfilter besteht aus einem elastischen Material, so daß es den Bewegungen der Betätigungsstange folgen kann.

## Ansprüche

1. Pneumatischer Kraftverstärker, insbesondere für hydraulische Kraftfahrzeugbremsanlagen, mit einem an einem Geberzylinder (1) befestigten Verstärkergehäuse (4), einem aus einer Ruhestellung in Richtung auf den Geberzylinder (1) zu bewegbaren Verstärkerkolben (26), einer vom Verstärkerkolben (26) getragenen Ventileinrichtung (31) zur Steuerung des in einer Arbeitskammer (30) herrschenden Drucks und einer Reaktionseinrichtung (21, 22), die bei Betätigung die an einer mit dem Steuerelement (41) der Ventileinrichtung (31) verbundenen, aus dem Verstärkergehäuse (4) herausgeführten Betätigungsstange (42) ausgeübte Kraft mit der vom Verstärkerkolben (26) abgegebenen Kraft in einem vorbestimmten Verhältnis addiert und beide Kräfte zum Kolben des Geberzylinders (1) leitet, wobei vom Kolben des Geberzylinders (1) ein Kraftübertragungselement (19) bewegbar ist, das axial in das Verstärkergehäuse (4) hineinragt und am Kraftübertragungselement (19) ein Arm (47) abgestützt ist, der sich quer vom Kraftübertragungselement (19) bis zur parallel zum Kraftübertragungselement (19) angeordneten und seitlich neben dem Geberzylinder (1) aus dem Verstärkergehäuse (4) herausgeführten Betätigungsstange (42) erstreckt und der die an der Betätigungsstange (42) eingeleitete Betätigungskraft auf das Kraftübertragungselement (19) überträgt, dadurch gekennzeichnet, daß das Kraftübertragungsglied eine Hülse (19) ist, die in der Zylinderbohrung (9) des Geberzylinders (1) geführt ist, und mit einem Ende einen Zapfen (18) am Ende des Kolbens (10) des Geberzylinders (1) umgreift und mit dem anderen Ende eine am Verstärkerkolben (26) befestigte Stange (23) aufnimmt, die der Halterung und Führung des Verstärkerkolbens (26) dient.

2. Kraftverstärker nach einem der vorhergehenden Ansprüche, dadurch gekennzeichnet, daß das Kraftübertragungselement (19) starr mit dem Arm (47) verbunden und gegenüber dem Kolben (10) des Geberzylinders (1) beweglich ist.

3. Kraftverstärker nach Anspruch 2, dadurch gekennzeichnet, daß die Reaktionseinrichtung (21) zwischen einer Anschlagfläche (22) des Kraftübertragungselementes (19) und dem Verstärkerkolben (26) einerseits und dem Kolben (10) des Geberzylinders (1) andererseits angeordnet ist.

4. Kraftverstärker nach Anspruch 3, dadurch gekennzeichnet, daß die Reaktionseinrichtung (21) aus einer Gummischeibe besteht, die innerhalb des Kraftübertragungselementes (19) liegt und mit einer Stirnfläche am Zapfen (18) des Kolbens (10) des Geberzylinders (1) und mit der anderen Stirnfläche an einem in dem Kraftübertragungselement (19) befestigten Ring (22) und an dem Kopf (24) der Stange (23) des Verstärkerkolbens (26) anlegbar ist.

5. Kraftverstärker nach Anspruch 1 dadurch gekennzeichnet, daß der Arm (68) an dem starr mit dem Kolben (10) des Geberzylinders (1) verbundenen Kraftübertragungselement (19) beweglich gelagert ist.

6. Kraftverstärker nach Anspruch 5, dadurch gekennzeichnet, daß der Arm ein schwenkbar gelagerter Hebel (68) ist, der die Reaktionseinrichtung bildet.

7. Kraftverstärker nach Anspruch 6, dadurch gekennzeichnet, daß der Hebel (68) durch eine Platte gebildet ist, die mit einer mittigen Öffnung (69) auf der Stange (23) des Arbeitskolbens (26) gelagert ist und mit einem gegabelten Ende (70) die Betätigungsstange (42) umgreift.

8. Kraftverstärker nach Anspruch 7, dadurch gekennzeichnet, daß die Platte (68) im Bereich der Abstützstellen am Kraftübertragungselement, (19, 47), Verstärkerkolben (26) und Betätigungsstange (42) aus der Plattenebene vorstehende Querrippen (71, 72, 73) aufweist.

9. Kraftverstärker nach einem der Ansprüche 6 bis 8, dadurch gekennzeichnet, daß die Bewegbarkeit des Hebels (68) in Betätigungsrichtung durch einen Anschlag (47) begrenzt ist.

10. Kraftverstärker nach Anspruch 9, dadurch gekennzeichnet, daß der Anschlag durch einen starr mit dem Kraftübertragungselement (19) verbundenen zweiten Arm (47) gebildet ist, dessen Ende die Betätigungsstange (42) umgreift.

11. Kraftverstärker nach Anspruch 10, dadurch gekennzeichnet, daß der zweite Arm (47) einen Anschlag in Bremslöserichtung für die Betätigungsstange (42, 75) bildet.

12. Kraftverstärker nach einem der Ansprüche 6 bis 11, dadurch gekennzeichnet, daß der Verstärkerkolben (26) in seinem Flächenschwerpunkt am Hebel (68) abgestützt ist.

13. Kraftverstärker nach einem der Ansprüche 6 bis 12, dadurch gekennzeichnet, daß das mit der Betätigungsstange (42) zusammenwirkende Ende (70) des Hebels (68) in Bremslöserichtung an einer Feder (74) abgestützt ist, und in der Ruhestellung des Kraftverstärkers zwischen den einander benachbarten Abstützflächen an Hebel und Betätigungsstange ein Spiel (x) vorhanden ist, dessen Größe dem Steuerweg zur Betätigung der Ventileinrichtung (31) entspricht.

14. Kraftverstärker nach Anspruch 13, dadurch gekennzeichnet, daß die Feder (74) durch einen Wulst des die Betätigungsstange (42) umgreifenden Dichtrings (44) in der Öffnung des Verstärkerkolbens (26) gebildet ist.

15. Kraftverstärker nach einem der vorhergehenden Ansprüche, dadurch gekennzeichnet, daß die Betätigungsstange (42) hohl ist und mit ihrem verstärkerseitigen Ende (45) das Steuerelement der Ventileinrichtung (31) bildet.

16. Kraftverstärker nach einem der vorhergehenden Ansprüche, dadurch gekennzeichnet, daß die Betätigungsstange (42) den Verstärkerkolben (26) durchdringt und die Ventileinrichtung (31) koaxial zur Betätigungsstange auf der dem Geberzylinder (1) abgekehrten Seite des Verstärkerkolbens (26) angeordnet ist.

17. Kraftverstärker nach Anspruch 16, dadurch gekennzeichnet, daß die Betätigungsstange (42) in einem elastischen Dichtring (44) in der Wand des Verstärkerkolbens (26) gleitend geführt ist.

18. Kraftverstärker nach Anspruch 17, dadurch gekennzeichnet, daß das Gehäuse (32) der Ventileinrichtung (31) das Ende (45) der Betätigungsstange (42) mit radialem Spiel umgibt.

19. Kraftverstärker nach einem der Ansprüche 16 bis 18, dadurch gekennzeichnet, daß das Gehäuse (32) der Ventileinrichtung (31) einen axial vorstehenden Zapfen (39, 76) aufweist, der in einer Öffnung im Verstärkerkolben (26) befestigt ist.

20. Kraftverstärker nach Anspruch 19, dadurch gekennzeichnet, daß in dem Zapfen (39) ein Verbindungskanal (40) von der Ventileinrichtung (31) zur Niederdruckkammer (29) verläuft.

21. Kraftverstärker nach einem der vorhergehenden Ansprüche, dadurch gekennzeichnet, daß das das Steuerelement bildende Ende (45) der Betätigungsstange (42) im Gehäuse (32) der Ventileinrichtung (31) geführt und das Gehäuse schwenkbar am Verstärkerkolben (26) gelagert ist.

22. Kraftverstärker nach Anspruch 21, dadurch gekennzeichnet, daß die schwenkbare Lagerung durch zwei Zapfen (76) am Gehäuse (32) gebildet ist, die elastische Ringe (77) im Verstärkerkolben (26) durchgreifen.

23. Kraftverstärker nach Anspruch 22, dadurch gekennzeichnet, daß der eine Zapfen (76) in der Mittelachse des Gehäuses (32) liegt und eine Hülse zur Führung der Betätigungsstange (42) bildet.

24. Kraftverstärker nach einem der vorhergehenden Ansprüche, dadurch gekennzeichnet, daß die Betätigungsstange (42) außerhalb des Verstärkergehäuses (4) mit einer schwenkbar am Geberzylinder (1) angelenkten Lasche gelenkig verbunden ist.

25. Kraftverstärker nach einem der vorhergehenden Ansprüche, dadurch gekennzeichnet, daß die Betätigungsstange (42) in einer achsparallelen Bohrung (48) des Geberzylinders (1) geführt ist.

26. Kraftverstärker nach Anspruch 25, dadurch gekennzeichnet, daß die Bohrung (48) eine Einlaßkammer für das Druckmittel bildet, und die hohle Betätigungsstange (42) innerhalb der Einlaßkammer eine seitliche Lufteintrittsöffnung (58) hat.

27. Kraftverstärker nach einem der vorhergehenden Ansprüche, dadurch gekennzeichnet, daß die Betätigungsstange (42) in der Wand (5) des Verstärkergehäuses (4) durch ein Rollmembran (78) abgedichtet ist, die in das Verstärkergehäuse hineinragt und für Atmosphärenluft eine Einlaßkammer (80) bildet, die an ihrem offenen Ende (79) durch einen Luftfilter (81, 82) verschlossen ist.

**Claims**

1. Pneumatic power booster, in particular for hydraulic brake systems for automotive vehicles, with a booster housing (4) fastened to a master cylinder (1), with a booster piston (26) movable from an inactive position in the direction of the master cylinder (1), with a valve device (31) carried by the booster piston (26) for control of the pressure prevailing in a working chamber (30), and with a reaction device (21, 22) which, upon actuation, adds the force that is exerted at an actuating rod (42), the latter being connected to the control element (41) of the valve device (31) and extending out of the booster housing (4), to the force generated by the booster piston (26) in a predetermined ratio and which transmits both forces to the piston of the master cylinder (1), the said piston of the master cylinder (1) serving to move a force-transmitting element (19) which projects axially into the booster housing (4), while an arm (47) is supported at the force-transmitting element (19) which extends transversely from the force-transmitting element (19) up to the actuating rod (42), the latter being arranged in parallel to the force-transmitting element (19) and projecting laterally beside the master cylinder (1) from the booster housing (4), and which arm transmits the actuating force introduced at the actuating rod (42) onto the force-transmitting element (19), characterized in that the force-transmitting element is a sleeve (19) which is guided in the cylinder bore (9) of the master cylinder (1) and which encompasses with its one end a peg (18) at the end of the piston (10) of the master cylinder (1), while it receives with its other end a rod (23) that is secured to the booster piston (26) and serves to hold and guide the booster piston (26).

2. Power booster as claimed in any one of the preceding claims, characterized in that the force-transmitting element (19) is rigidly connected to the arm (47), while it is movable in relation to the piston (10) of the master cylinder (1).

3. Power booster as claimed in claim 2, characterized in that the reaction device (21) is interposed between a stop surface (22) of the force-transmitting element (19) and the booster piston (26), on the one hand, and the piston (10) of the master cylinder (1), on the other hand.

4. Power booster as claimed in claim 3, characterized in that the reaction device (21) in a rubber disc which is housed within the force-transmitting element (19) and is adapted to abut with its one end surface on the peg (18) of the piston (10) of the master cylinder (1) and with its other end surface on a ring (22), which is fastened in the force-transmitting element (19), and on the head (24) of the rod (23) of the booster piston (26).

5. Power booster as claimed in claim 1, characterized in that the arm (68) is supported movably at the force-transmitting element (19) which is rigidly connected to the piston (10) of the master cylinder (1).

6. Power booster as claimed in claim 5, characterized in that the arm is a pivoted lever (68) forming the reaction device.

7. Power booster as claimed in claim 6, characterized in that the lever (68) âis formed by a plate, the centric opening (69) of which is supported on the rod (23) of the working piston (26) and the forked end (70) of which embraces the actuating rod (42).

8. Power booster as claimed in claim 7, characterized in that the plate (68) includes transverse fins (71, 72, 73), which project from the plane of the plate in the area of the points of support at the force-transmitting element (19, 47), the booster piston (26) and the actuating rod (42).

9. Power booster as claimed in any one of the claims 6 to 8, characterized in that the movability of the lever (68) in the actuating direction is bounded by a stop (47).

10. Power booster as claimed in claim 9, characterized in that the stop is formed by a second arm (47) which is rigidly connected to the force-transmitting element (19) and the end of which embraces the actuating rod (42).

11. Power booster as claimed in claim 10, characterized in that the second arm (47) forms a stop for the actuating rod (42, 75) in the brake's release direction.

12. Power booster as claimed in any one of the claims 6 to 11, characterized in that the booster piston (26) is supported in its center of gravity of the surface on the lever (68).

13. Power booster as claimed in any one of the claims 6 to 12, characterized in that the end (70) of the lever (68) cooperating with the actuating rod (42) bears against a spring (74) in the brake's release direction, and in that there is a clearance (x) between the neighbouring supporting surfaces at lever and actuating rod in the inactive position of the power booster, the magnitude of said clearance corresponding to the control travel for the actuation of the valve device (31).

14. Power booster as claimed in claim 13, characterized in that the spring (74) is formed by a bead of the sealing ring (44) encompassing the actuating rod (42) in the opening of the booster piston (26).

15. Power booster as claimed in any one of the preceding claims, characterized in that the actuating rod (42) is hollow and forms with its end (45) close to the booster the control element of the valve device (31).

16. Power booster as claimed in any one of the preceding claims, characterized in that the actuating rod (42) penetrates the booster piston (26), and the valve device (31) is located coaxially to the actuating rod on the side of the booster piston (26) remote from the master cylinder (1).

17. Power booster as claimed in claim 16, characterized in that the actuating rod (42) is guided slidably in an elastic sealing ring (44) in the wall of the booster piston (26).

18. Power booster as claimed in claim 17, characterized in that the housing (32) of the valve device (31) encloses the end (45) of the actuating rod (42) with radial clearance.

19. Power booster as claimed in any one of the claims 16 to 18, characterized in that the housing (32) of the valve device (31) includes an axially projecting peg (39, 76) which is secured in an opening in the booster piston (26).

20. Power booster as claimed in claim 19, characterized in that a connecting channel (40) extends in the peg (39) from the valve device (31) to the low-pressure chamber (29).

21. Power booster as claimed in any one of the preceding claims, characterized in that the end (45) of the actuating rod (42) which constitutes the control element is guided in the housing (32) of the valve device (31), and in that the housing is supported tiltably at the booster piston (26).

22. Power booster as claimed in claim 21, characterized in that the tiltable support is formed by two pegs (76) at the housing (32) which extend through elastic rings (77) in the booster piston (26).

23. Power booster as claimed in claim 22, characterized in that the one peg (76) is located in the centre axle of the housing (32) and forms a sleeve for guiding the actuating rod (42).

24. Power booster as claimed in any one of the preceding claims, characterized in that the actuating rod (42) is linked outside the booster housing (4) to a lug which is tiltably articulated at the master cylinder (1).

25. Power booster as claimed in any one of the preceding claims, characterized in that the actuating rod (42) is guided in a paraxial bore (48) of the master cylinder (1).

26. Power booster as claimed in claim 25, characterized in that the bore (48) forms an inlet chamber for the pressure fluid, and in that the hollow actuating rod (42) contains a lateral air intake port (58) within the inlet chamber.

27. Power booster as claimed in any one of the preceding claims, characterized in that the actuating rod (42) is sealed in the wall (5) of the booster housing (4) by a rolling diaphragm (78) which projects into the booster housing and forms an inlet chamber (80) for atmospheric air, the latter chamber being closed at its open end (79) by an air filter (81, 82).

**Revendications**

1. Amplificateur pneumatique de force, destiné notamment aux systèmes hydrauliques de freinage équipant les véhicules automobiles, comportant un carter (4) solidarisé à un maître-cylindre (1), un piston (26) pouvant se déplacer depuis une position de repos en direction du maître-cylindre (1), un dispositif de soupapes (31) supporté par le piston (26) et destiné à commander la pression régnant dans une chambre de travail (30) et un dispositif de réaction (21, 22) qui, lorsqu'il est actionné, additionne la force exercée sur une tige de commande (42) sortant du carter (4) et reliée à un élément de commande (41) du dispositif de soupapes (31) avec la force fournie par le piston (26) selon un rapport prédéterminé et dirige ces deux forces vers le piston du maître-cylindre (1) et dans lequel un élément de transmission (19) actionné par le piston du maître-cylindre (1) pénètre dans le sens axial dans le carter (4) et un bras (47) prend appui sur ledit élément de transmission (19), ledit bras étant orienté transversalement par rapport à l'élément de transmission (19) et se prolongeant jusqu'à la tige de commande (42) montée parallèlement à l'élément de transmission (19) et sortant latéralement du carter (4) à côté du maître-cylindre (1) et ledit bras (47) transmettant à l'élément de transmission (19) la force de commande exercée sur la tige de commande (42), caractérisé en ce que l'élément de transmission (19) est une douille (19) introduite dans l'alésage (9) du maître-cylindre (1), dont l'une des extrémités enserre un téton (18) au bout du piston (10) du maître-cylindre (1) et dont l'autre extrémité reçoit une tige (23) fixée au piston (26), ladite tige servant à maintenir et à guider le piston (26).

2. Amplificateur de force conforme à l'une des revendications précédentes, caractérisé en ce que l'élément de transmission (19) est rigidement fixé au bras (47) et est mobile par rapport au piston (10) du maître-cylindre (1).

3. Amplificateur de force conforme à la revendication 2, caractérisé en ce que le dispositif de réaction (21) est logé entre une surface d'appui (22) de l'élément de transmission (19) et le piston (26), d'une part, et le piston (10) du maître-cylindre (1), d'autre part.

4. Amplificateur de force conforme à la revendication 3, caractérisé en ce que le dispositif de réaction (21) est constitué d'un disque en caoutchouc qui est placé à l'intérieur de l'élément de transmission (19) et dont l'une des faces est appliquée contre le téton (18) du piston (10) du maître-cylindre (1), l'autre face étant appliquée sur une bague (22), fixée sur l'élément de transmission (19), et sur la tête (24) de la tige (23) du piston (26).

5. Amplificateur de force conforme à la revendication 1, caractérisé en ce que le bras (68) est mobile par rapport à l'élément de transmission (19) solidarisé au piston (10) du maître-cylindre (1).

6. Amplificateur de force conforme à la revendication 5, caractérisé en ce que le bras est un levier (68) basculant constituant le dispositif de réaction.

7. Amplificateur de force conforme à la revendication 6, caractérisé en ce que le levier (68) est formé par une plaque montée par un perçage central (69) sur la tige (23) du piston (26) et enserrant la tige de commande (42) dans une extrémité en forme de fourche (70).

8. Amplificateur de force conforme à la revendication 7, caractérisé en ce que, au niveau des points d'appui sur l'élément de transmission (19, 47), le piston (26) et la tige de commande (42), la plaque (68) comporte des nervures transversales (71, 72, 73) en saillie.

9. Amplificateur de force conforme à l'une des revendications 6 à 8, caractérisé en ce que la course du levier (68) dans le sens d'actionnement est limitée par une butée (47).

10. Amplificateur de force conforme à la revendication 9, caractérisé en ce que la butée est formée par un second bras (47) solidarisé à l'élément de transmission (19), l'extrémité dudit bras enserrant la tige de commande (42).

11. Amplificateur de force conforme à la revendication 10, caractérisé en ce que le second bras (47) constitue une butée pour la tige de commande (42, 75) dans le sens de relâchement du frein.

12. Amplificateur de force conforme à l'une des revendications 6 à 11, caractérisé en ce que le piston (26) repose sur le levier (68) au niveau de son centre de gravité superficiel.

13. Amplificateur de force conforme à l'une des revendications 6 à 12, caractérisé en ce que l'extrémité (70) du levier (68), agissant avec la tige de commande (42), repose dans le sens de relâchement du frein sur un ressort (74), et en ce que, lorsque l'amplificateur de force est en position de repos, il est prévu, entre les surfaces d'appui voisines au niveau du levier et de la tige de commande, un jeu (x) dont l'amplitude correspond à la course nécessaire à l'actionnement du dispositif de soupapes (31).

14. Amplificateur de force conforme à la revendication 13, caractérisé en ce que le ressort (74) est formé par un bourrelet de la bague d'étanchéité (44) enserrant la tige de commande (42) dans l'ouverture du piston (26).

15. Amplificateur de force conforme à l'une des revendications précédentes, caractérisé en ce que la tige de commande (42) est creuse et en ce que son extrémité (45) côté amplificateur constitue l'élément de commande du dispositif de soupapes (31).

16. Amplificateur de force conforme à l'une des revendications précédentes, caractérisé en ce que la tige de commande (42) traverse le piston (26) et en ce que le dispositif de soupapes (31) est positionné coaxialement à la tige de commande sur le côté du piston opposé au maître-cylindre (1).

17. Amplificateur de force conforme à la revendication 16, caractérisé en ce que la tige de commande (42) est montée pour coulisser dans une bague d'étanchéité élastique (44) dans la paroi du piston (26).

18. Amplificateur de force conforme à la revendication 17, caractérisé en ce que le boîtier (32) du dispositif de soupapes (31) entoure l'extrémité (45) de la tige de commande (42) en réservant un jeu radial.

19. Amplificateur de force conforme à l'une des revendications 16 à 18, caractérisé en ce que le boîtier (32) du dispositif de soupapes (31) est pourvu d'un téton axial (39, 76) fixé dans une ouverture du piston (26).

20. Amplificateur de force conforme à la revendication 19, caractérisé en ce qu'un canal de raccordement (40) traverse le téton (39) et relie le dispositif de soupapes (31) à la chambre à basse pression (29).

21. Amplificateur de force conforme à l'une des revendications précédentes, caractérisé en ce que l'extrémité (45) de la tige (42) formant l'élément de commande est logée dans le boîtier (32) du dispositif de soupapes (31) et en ce que le boîtier est monté de façon à pouvoir osciller sur le piston (26).

22. Amplificateur de force conforme à la revendication 21, caractérisé en ce que le montage oscillant est constitué par deux tétons (76) prévus sur le boîtier (32), qui traversent des bagues élastiques (77) montées sur le piston (26).

23. Amplificateur de force conforme à la revendication 22, caractérisé en ce que l'un desdits tétons (76) se trouve dans l'axe central du boîtier (32) et forme une douille assurant le guidage de la tige de commande (42).

24. Amplificateur de force conforme à l'une des revendications précédentes, caractérisé en ce que la tige de commande (42) est articulée, à l'extérieur du boîtier (4), avec une éclisse prenant appui sur le maître-cylindre (1).

25. Amplificateur de force conforme à l'une des revendications précédentes, caractérisé en ce que la tige de commande (42) est introduite dans un perçage (48) parallèle à l'axe du maître-cylindre (1).

26. Amplificateur de force conforme à la revendication 25, caractérisé en ce que le perçage (48) forme une chambre d'admission pour l'agent de pression et en ce que la tige de commande creuse (42) comporte, à l'intérieur de la chambre d'admission une lumière latérale (58) réservée à l'arrivée d'air.

27. Amplificateur de force conforme à l'une des revendications précédentes, caractérisé en ce que, dans la paroi (5) du carter (4), la tige (42) traverse avec étanchéité grâce à une membrane roulante (78) qui pénètre dans le carter de l'amplificateur et forme une chambre d'admission pour l'air atmosphérique, ladite chambre étant fermée à son extrémité ouverte (79) par un filtre à air (81, 82).

Fig. 1

Fig. 2

Fig. 3

# Fig. 4

# Fig. 5